# EUROPEAN PATENT APPLICATION

(11) **EP 4 563 308 A1**
(43) Date of publication of application: **04.06.2025**
(21) Application number: 24216199.0
(22) Date of filing: 28.11.2024
(51) Int. Cl.: B27B 17/14, B23D 57/02, B27B 17/02

(54) **CHAINSAWS AND TENSIONING SYSTEMS FOR CHAINSAWS**

(30) Priority: 01.12.2023 US 202363605038 P
(71) Applicant: Techtronic Cordless GP, Anderson, SC 29621 (US)
(72) Inventor: AMICK Jr., Ashley Bryan, Anderson, 29621 (US); OLVERA, Eduardo, Anderson, 29621 (US); PROBY, Nicholas, Anderson, 29621 (US)
(74) Representative: Zimmermann & Partner Patentanwälte mbB

(57) **Abstract**

A chainsaw including: a housing; a motor supported by the housing, the motor comprising an output shaft; a guide bar, the guide bar defining a cutting track; a cutting implement guided by the cutting track and driven about the guide bar by rotation of the output shaft; a tension adjusting system for adjusting tension in the cutting implement by displacing the guide bar towards or away from the housing, the tension adjusting system comprising a user actuatable interface accessible from an exterior of the housing, wherein the user actuatable interface is a bistable movable between a first position and a second position, wherein the tension adjusting system tensions the cutting implement to a cutting tension when the user actuatable interface is in the first position, and wherein the tension adjusting system tensions the cutting implement to a relaxed tension when the user actuatable interface is in the second position.

## Description

### CROSS-REFERENCE TO RELATED APPLICATIONS

The present application claims priority to U.S. Provisional Patent Application Ser. No. 63/605,038 filed on December 1, 2023, the disclosure of which is incorporated by reference herein in its entirety.

### FIELD

The present disclosure relates generally to chainsaws, and more particularly to tensioning systems and associated methods for tensioning cutting implements, e.g., chains, of chainsaws.

### BACKGROUND

Chainsaws generally include an infinite cutting implement, such as an endless chain, that extends around a bar. The chain includes sharp teeth that cut into material when the bar is pressed into the material and the chain is driven. Traditional chainsaws lack suitable tensioning systems for adjusting tension in the chain. As a result, chains are typically left in their tensioned states for prolonged periods of time, resulting in quicker fatigue and wear.

Accordingly, improved chainsaws and chainsaw tensioning systems are desired in the art. In particular, chainsaw tensioning systems which provide easier tensioning operation would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a chainsaw is provided. The chainsaw includes a housing; a motor supported by the housing, the motor comprising an output shaft; a guide bar coupled to the housing, the guide bar defining a cutting track; a cutting implement guided by the cutting track and driven about the guide bar by rotation of the output shaft; a tension adjusting system for adjusting tension in the cutting implement by displacing the guide bar towards or away from the housing, the tension adjusting system comprising a user actuatable interface accessible from an exterior of the housing, wherein the user actuatable interface is a bistable movable between a first position and a second position, wherein the tension adjusting system tensions the cutting implement to a cutting tension when the user actuatable interface is in the first position, and wherein the tension adjusting system tensions the cutting implement to a relaxed tension when the user actuatable interface is in the second position.

In accordance with another embodiment, a tension adjusting system for adjusting tension in a cutting implement of a chainsaw is provided. The tension adjusting system includes a user actuatable interface accessible from an exterior of a housing of the chainsaw, wherein the user actuatable interface is a bistable movable between a first position and a second position; a slider movably coupled to a rail and displaceable along the rail by actuation of the user actuatable interface; a tensioning pin operably coupled to a guide bar of the chainsaw, the guide bar having a cutting track to guide the cutting implement; and a spring disposed between the slider and the tensioning pin, wherein the spring transmits force to the tensioning pin as the slider moves towards the tensioning pin, and wherein the force transmitted from the slider to the tensioning pin causes the guide bar to displace away from a housing of the chainsaw, thereby increasing tension in the cutting implement from a relaxed tension to a cutting tension.

In accordance with another embodiment, a method of tensioning a cutting implement of a chainsaw is provided. The method includes, with the cutting implement at the relaxed tension, actuating a user actuatable interface from a first position towards a second position, wherein actuating the user actuatable interface comprises rotating the user actuatable interface until reaching a critical threshold of actuation, the critical threshold of actuation occurring prior to the user actuatable interface reaching the second position, wherein, upon reaching the critical threshold of actuation, the user actuatable interface moves to the second position, and wherein the cutting implement is at a cutting tension with the user actuatable interface in the second position; and actuating a bar support to lock a guide bar of the chainsaw at a fixed location relative to a housing of the chainsaw to maintain the cutting implement at the cutting tension.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a chainsaw in accordance with embodiments of the present disclosure;
FIG. 2 is a lower perspective view of a portion of the chainsaw in accordance with embodiments of the present disclosure;
FIG. 3 is a perspective view of the portion of the chainsaw in accordance with embodiments of the present disclosure;
FIG. 4 is a side view of a portion of the chainsaw in accordance with embodiments of the present disclosure with a tensioning system in a first position;
FIG. 5 is a perspective view of a chainsaw in accordance with embodiments of the present disclosure with the tensioning system in a second position;
FIG. 6 is a side view of a portion of the chainsaw in accordance with embodiments of the present disclosure;
FIG. 7 is a side view of a portion of the tensioning system in accordance with embodiments of the present disclosure;
FIG. 8 is a perspective view of the tensioning system in accordance with embodiments of the present disclosure; and
FIG. 9 is a flow chart of a method of adjusting tension in a cutting implement of a chainsaw in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

The term "chainsaw" as used herein is intended to refer to a power tool including a movable cutting implement, such as a movable chain, guided along a cutting track. The cutting implement is typically formed from a plurality of independent linkages. Each linkage includes an elongated body defining one or more cutting surfaces, often referred to as teeth. The cutting surfaces extend from the linkages in a pattern and are aligned with one another such that movement of the cutting implement over an object results in the cutting surfaces of the cutting implement cutting into the object.

The linkages may be joined together via pins or other connection interfaces which extend through apertures in adjacent linkages. The linkages are able to pivot relative to one another via the pins, thereby allowing the cutting implement to infinitely move along the cutting track defined by an ovular guide bar of the chainsaw. As the cutting implement is driven about the guide bar by an onboard motive device, such as a drive motor, the cutting surfaces dig into the object being cut, thus generating drag. Over prolonged use, this drag (in combination with force imparted onto the cutting implement by the motor) causes the individual linkages to stretch or elongate in the cutting direction. Due to the large number of linkages combined to form the cutting implement, even nominal elongation of each linkage can result in a readily noticeable elongation of the cutting implement. It is not uncommon for cutting implements to stretch by at least 10 millimeters (mm), such as at least 20 mm, such as at least 30 mm over extended routine use. When using the chainsaw to cut an object with the cutting implement in the elongated (stretched) state, the individual linkages are significantly more likely to jump from the cutting track, creating a potentially hazardous working environment for the user and nearby bystanders. Once the cutting implement reaches a critical limit of elongation (stretch), it is necessary to replace the cutting implement with a new cutting implement.

Linkage fatigue occurs not only when the chainsaw is actively cutting objects, but also as a result of prolonged (active) storage of tension. For example, most chainsaws have prescribed cutting tensions which are suggested by the manufacturer for the chainsaw to efficiently and safely operate. Users frequently tension the cutting implement to the suggested cutting tension (or greater) to perform a cutting operation. Once the cutting operation is complete, the user typically does not adjust the tension in the cutting implement from the cutting tension to a more relaxed state. Instead, the chainsaw is typically stored as-is, with the cutting implement tensioned to the cutting tension. As a result, the linkages remain under some load, sometimes for extended periods of time of inactivity. Over time, the pins joining adjacent linkages together can stretch or cause the linkages to stretch, thereby weakening the cutting implement.

Replacing the cutting implement was traditionally performed using tools. For example, the guide bar was typically anchored to the housing by threaded bolts which interface with complementary threaded lugs extending from the housing. The user must loosen the bolts with a wrench to allow displacement of the guide bar towards the housing. After displacing the guide bar a sufficient distance towards the housing, the cutting implement can be laterally removed from the cutting track and replaced with a new cutting implement. Once the new cutting implement is in place relative to the guide bar, the guide bar is displaced away from the housing until reaching a position where the cutting implement exhibits desired cutting tension. The bolts are tightened onto the threaded lugs and the chainsaw is ready to be used in a cutting operation.

This process has several drawbacks. First, the user does not always have the necessary tools to loosen the guide bar to permit removal of the cutting implement. When tension in the cutting implement becomes too low, the user may be required to take the chainsaw to a different location to perform the chain tension adjustment, thereby wasting time. Second, the bolt and lug can become stuck together after prolonged use in extreme operating conditions, thus requiring high torque application by the user on the bolt. In some instances, the user might slip when attempting to loosen the bolt and cut themself on the teeth of the cutting implement. Third, most users are not able to discern appropriate cutting tension when installing a new cutting implement. That is, it is not easy for beginners to determine when the cutting tension is within a prescribed (ideal) cutting tension range. While experienced chainsaw users may have developed an understanding of how to set cutting tension based on how easily the cutting implement peels away (displaces from) the cutting track when pulled, beginners often overtighten cutting implements, resulting in increased drag during use which can reduce operable lifespan of the new cutting implement.

Embodiments described herein permit the user to rapidly and easily detension the cutting implement from the cutting tension to a relatively relaxed tension. In this regard, the user can quickly modify the chainsaw to a storage configuration or cutting implement changing configuration after completing a cutting operation. The detensioning operation can be performed without requiring the use of tools and can be performed without having to remove any portion of the housing to expose a bolt or tension-holding component.

Embodiments described herein also permit the user to rapidly and easily retention the cutting implement from the relaxed tension to the cutting tension. In this regard, the user can quickly modify the chainsaw to an in-use configuration prior to starting a cutting operation. The tensioning operation can be performed without requiring the use of tools and can be performed without having to remove any portion of the housing to expose a bolt or tension-holding component.

The user can affect the tension of the cutting implement using a tension adjusting system. The tension adjusting system can include a user actuatable interface that permits a user to interact with the tension adjusting system. The user actuatable interface can extend from the housing of the chainsaw so as to be accessible to the user without having to remove any portion of the housing prior to accessing the user accessible interface.

In an embodiment, the user actuatable interface includes a pivotable (rotatable) lever. The lever pivots about a pivot point. The pivot point can be disposed within the housing, protected against environmental debris and damage during use of the chainsaw. A first end of the lever extends outward from the housing to a user accessible location. A second (opposite) end of the lever extends away from the pivot point, e.g., further into the housing. The second end of the lever can be coupled to a linkage. For example, the second end of the lever can include an axle which interfaces with an axle opening in the linkage, or vice versa. The linkage can be further coupled with a slider. For example, the linkage can be rotationally coupled to the slider. The slider can be slidably coupled to a rail. In an embodiment, the rail has a generally linear shape, extending in a straight line. In other embodiments, the rail can have a non-linear, e.g., arcuate, shape. As the user actuatable interface is moved, the linkage causes the slider to move along the rail. Movement of the slider along the rail causes a spring to deflect between a compressed state and an uncompressed state. Compression of the spring is created by force of the slider against a first end of the spring and force created by a slidable body disposed on a second end of the spring. As the slider moves along the rail towards the spring as a result of actuating the user actuatable interface, internal force builds up in the spring. At some threshold internal force stored by the spring, the spring causes the slidable body to move away from the slider. In an embodiment, the slidable body is coupled to the same rail as the slider. Thus, the slidable body moves along the rail away from the slider under force generated by the spring. The slidable body includes a tensioning pin. In some implementations, the slidable body and tensioning pin are formed from a unitary (single-piece) rigid construction. The tensioning pin can interface with the guide bar of the chainsaw such that movement of the slidable body causes the guide bar to displace. In an embodiment, the tensioning pin can extend into an opening in the guide bar. When the slidable body moves, the tensioning pin pushes against the sidewall of the opening in the guide bar, thus causing the guide bar to move. When the user actuatable interface moves away from the guide bar, the guide bar can move towards a position whereby the cutting implement exhibits a relaxed tension. Conversely, when the user actuatable interface moves towards the guide bar, the guide bar can move towards a position whereby the cutting implement exhibits a cutting tension.

The user actuatable interface is generally movable between two end range positions, namely a first position and a second position. The first and second positions can be angularly offset from one another by an angular offset. The angular offset can be at least 5°, such as at least 10°, such as at least 15°, such as at least 20°, such as at least 25°, such as at least 30°, such as at least 35°, such as at least 40°, such as at least 45°. The user can rotate the user actuatable interface between the first and second positions to tension and detension the cutting implement. The first position can be associated with the cutting tension and the second position can be associated with the relaxed tension.

In one or more implementations, the user actuatable interface operates as a bistable structure whereby the user actuatable interface, when released by the user, automatically moves, e.g., snaps, to one of the first or second positions. That is, when not actively engaged by the user, the user actuatable interface moves to and/or remains in one of the first or second positions. No intermediate positions are possible with the bistable structure without the user maintaining force along the user actuatable interface. In some instances, the bistable structure can define a critical threshold between the first and second positions. When moving the user actuatable interface from one of the first or second positions towards the other of the first or second positions, the critical threshold defines the point where the user actuatable interface snaps to the other position. For instance, by way of non-limiting example, the critical threshold may occur halfway between the first and second positions. After passing halfway between the first and second positions, the user actuatable interface snaps to the other position. Conversely, if the user moves the user actuatable interface less than halfway from one position to the other position and then releases the user actuatable interface, the user actuatable interface snaps back to the original position. In some implementations, the critical threshold may not be aligned with the halfway point between the first and second positions. For example, the critical threshold can be closer to one of the first or second positions. In some instances, the critical threshold may be different for each direction the user actuatable interface moves. For example, when moving from the first position to the second position, the critical threshold may occur at a first location that is different from a second location which occurs when moving from the second position to the first position.

In an embodiment, the bistable structure can be influenced (e.g., created) by the spring alone or in combination with internal tension in the cutting implement. Tension in the cutting implement may be oriented in a direction opposite the compressive force stored by the spring. These two forces (i.e., the force of the spring and tension in the cutting implement) can interact with one another, e.g., offset, to create the critical threshold in combination with the rotational position of the user actuatable interface.

In another embodiment, the user actuatable interface may be an infinitely adjustable interface, i.e., not a bistable structure. In this regard, the user actuatable interface need not snap to one position when released by the operator. In some instances, the infinitely adjustable interface can remain at a position when released by the user. In this regard, the user can affect the position of the user actuatable interface and remove force thereto, causing the user actuatable interface to remain at the position where the user removed further application of force. By way of example, the user actuatable interface can be coupled to a ratchet system which prevents the user actuatable interface from moving when force is no longer applied to the user actuatable interface by the user.

In some implementations, the user may receive a tactile and/or audible indication associated with movement of the user actuatable interface. For instance, the user actuatable interface can snap to the position of travel upon passing the critical threshold. The user may experience the snap to the position of travel as a tactile and/or audible feedback, letting the user know that the action of tension adjustment has completed.

The user actuatable interface described herein adjusts a relative position of the guide bar with respect to the housing. Since the output shaft from the motor is relatively fixed to the housing and the cutting implement surrounds the guide bar, movement of the guide bar affects the state of tension in the cutting implement. When the guide bar moves away from the housing, tension in the cutting implement increases. Conversely, when the guide bar moves towards the housing, tension in the cutting implement decreases.

Using the tensioning system described herein, a user can quickly adjust tension in the cutting implement without overtightening the cutting implement. In an embodiment, the tensioning system includes an overload limiter, such as an energy absorption component, that transmits force from the user actuatable interface to the tensioning pin without allowing the transmitted force to exceed a threshold value. By way of example, the energy absorption component can include a biasing element (such as the aforementioned spring) that couples the slider to the tensioning pin. When the slider is moved by actuation of the user actuatable interface, the slider interacts with the biasing element causing the biasing element to interact with the tensioning pin by transferring some (or all) of the force from the slider to the tensioning pin. The biasing element can also absorb some of the force from the slider, e.g., by compressing, thus transmitting less than the entire force to the tensioning pin.

The cutting tension of the cutting implement can be controlled by changing the characteristics of the overload limiter. For example, stiffer springs can result in greater cutting tension in the cutting implement. Conversely, weaker springs can result in relatively lighter cutting tension in the cutting implement. In an embodiment, the spring can be selected from a plurality of springs each having a different spring constant K. By selecting from the plurality of springs and swapping the current spring for a different spring, the user can tune cutting tension. For more powerful chainsaws, the selected spring may have a relatively higher spring constant. Meanwhile, relatively weaker chainsaws can utilize springs with a lighter spring constant.

In an embodiment, the tension adjusting system can automatically maintain tension of the cutting implement in a desired cutting tension range even as the cutting implement stretches. For example, the spring can bias the slidable body to move the guide bar away from the housing as the cutting implement stretches. Thus, the spring can take up slop in the cutting implement as a result of elongated linkages.

In some implementations, the tension adjusting system described herein can provide a suspension benefit to the user. That is, the spring can actively affect cutting tension in the cutting implement by remaining under load, i.e., pressing the sliding body away from the slider. When the guide bar is pressed towards the housing, i.e., towards the sliding body, the spring may further compress under the pressing force introduced to the guide bar, thereby allowing nominal movement of the guide bar in response to the pressing force thereupon. This suspension effect can reduce operator fatigue by mitigating some component of vibrational transfer to the user through the chainsaw. Additionally, the suspension effect can result in a smoother and easier handling operational characteristic.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

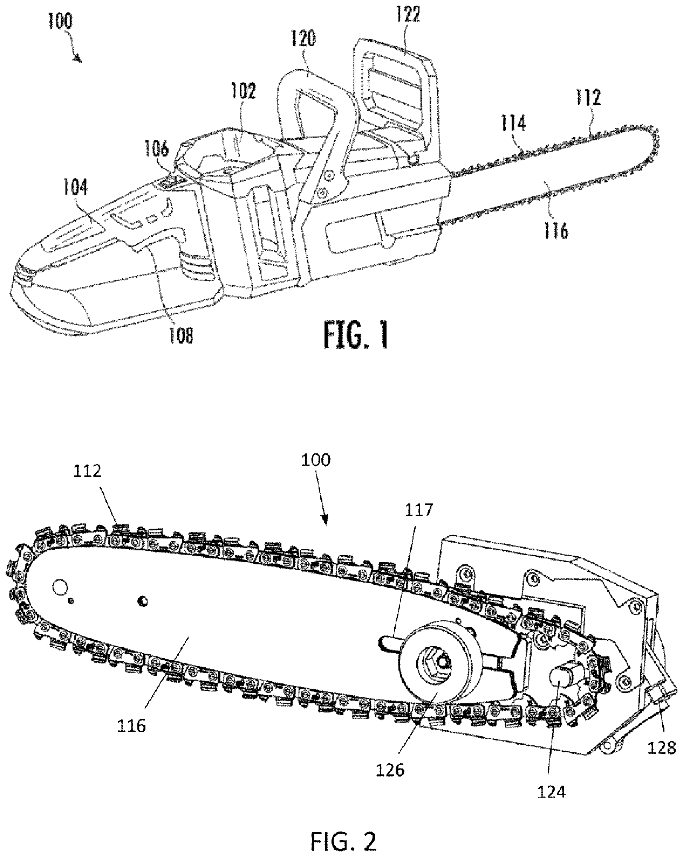

Referring now to the drawings, FIG. 1 illustrates a perspective view of an exemplary chainsaw 100 in accordance with an embodiment described herein. The chainsaw 100 includes a housing 102 defining a handle 104. The handle 104 may be unitary with the housing 102. The handle 104 can form a rearmost portion of the chainsaw 100 and provide a gripping surface for the operator to hold the chainsaw 100 with an overhand or underhand grip.

The chainsaw 100 includes one or more power-controlling features 106 that control an operational aspect of the chainsaw 100. For instance, the one or more power-controlling features 106 can include an ON/OFF button that controls whether power is supplied to the chainsaw 100 when a control feature 108 is engaged. The control feature 108 can control the relative speed of a motor 119 (FIG. 2) of the chainsaw 100. As the operator increases speed of the motor 119 using the control feature 108, a cutting implement 112 (e.g., a chain) can move at increased speeds along a cutting track 114 formed in a guide bar 116 of the chainsaw 100. The chainsaw 100 may additionally include one or more secondary handles 120 and/or one or more guards 122 configured to brake the chain and/or protect the operator from flying debris, wood chips, and the like which may be scattered, for example, by the cutting implement 112 during operation of the chainsaw 100.

The guide bar 116 can be coupled to the housing 102 in a manner that permits relative movement of the guide bar 116 with respect to the housing 102. The guide bar 116 can lie alone a plane and move towards and away from the housing in a direction parallel with the plane. The cutting track 114 is formed in a perimeter of the guide bar 116 and defines a track along which the cutting implement 112 can infinitely move when driven by the motor.

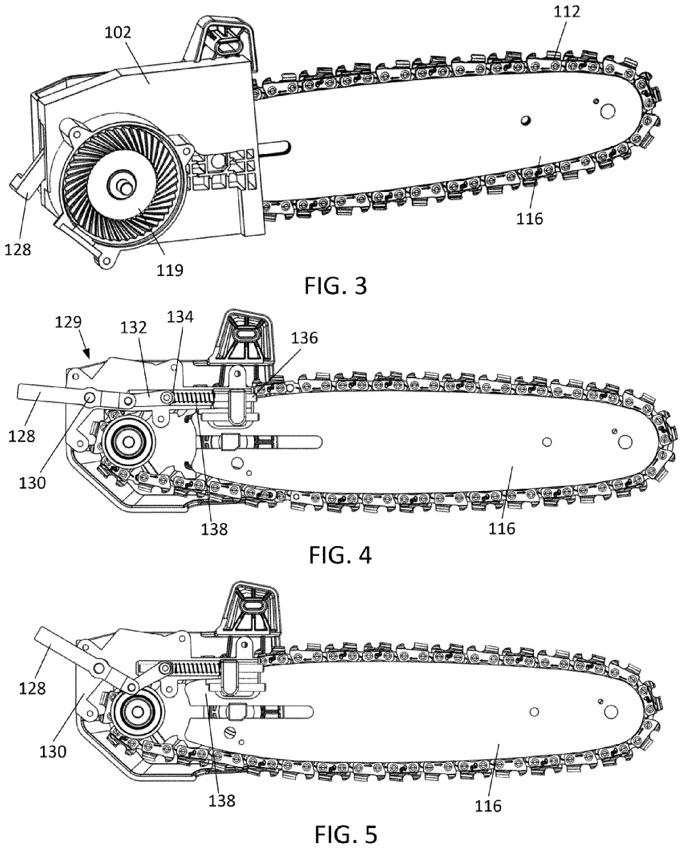

FIGS. 2 and 3 illustrate a portion of the chainsaw 100 as seen in accordance with an embodiment. In particular, FIG. 2 depicts a left side of the portion of the chainsaw 100 and FIG. 3 depicts a right side of the portion of the chainsaw 100. The depicted portion of the chainsaw 100 includes the bar 116, the cutting implement 112, an output shaft 124 that is rotatably driven by the motor of the chainsaw 100 to drive the cutting implement 112 about the bar 116, a bar support 126 configured to support and fix the bar 116 to the housing 102, and a user actuatable interface 128 that allows a user to actuate a tensioning system 129 (see FIGS. 4 to 8) of the chainsaw 100 to adjust tension in the cutting implement 112 as described in greater detail below.

The guide bar 116 can include an adjustment slot 117 which interfaces with a lug extending from the housing 102. The guide bar 116 can move relative to the lug within the confines defined by the adjustment slot 117. The bar support 126 can be accessible to a user at a location external to the housing 102. The bar support 126 can be threadably received on the lug. The bar support 126 can include, for example, a knob that allows a user to rotate the bar support 126 relative to the lug. When the bar support 126 is rotated in a first direction about the lug, the bar support 126 loosens, permitting the guide bar 116 to move relative to the housing 102 within the confines defined by the adjustment slot 117. When the bar support 126 is rotated in a second direction about the lug (the second direction being opposite the first direction), the bar support 126 tightens, locking the guide bar 116 at a relatively fixed position with respect to the housing 102. In this regard, the user can move (e.g., rotate) the bar support 126 to permit adjustment of the guide bar 116 and lock the guide bar 116 in place once the guide bar 116 is at a desired location.

Tensioning systems described herein are configured to adjust tension in the cutting implement 112. Tension can be adjusted between a relaxed tension (i.e., a relatively non-tensioned state) (e.g., when swapping an existing cutting implement 112 for a new cutting implement 112 or when the chainsaw 100 is stored) and a cutting tension (i.e., a relatively tensioned state) (e.g., when the chainsaw 100 is prepared for or in use). To adjust tension of the cutting implement 112, the user can toggle the user actuatable interface 128 between a first position and a second position. FIG. 4 depicts the user actuatable interface 128 in the first position. FIG. 5 depicts the user actuatable interface 128 in the second position.

In the depicted embodiment, the user actuatable interface 128 is rotatable about a pivot point 130. In other embodiments, the user actuatable interface 128 can be translatable, roto-translatable, or operate via another mechanism of operation. In the first position depicted in FIG. 4, the tensioning system 129 is in the tensioned state with the cutting implement 112 at the cutting tension. In the second position depicted in FIG. 5, the tensioning system 129 is in a detensioned state whereby the cutting implement 112 has a relatively reduced internal tension (e.g., a relaxed tension).

In some implementations, the user actuatable interface 128 is a bistable including a plurality of different states, including, e.g., a first state associated with the first position and a second state associated with the second position. The user actuatable interface 128 can automatically move from one of the first or second positions to the other of the first or second positions upon reaching a critical threshold of movement towards the other position. For instance, when a user moves the user actuatable interface 128 approximately halfway from the first position to the second position, the bistable user actuatable interface 128 can automatically complete movement (i.e., snap) to the second position. However, if the user releases the user actuatable interface 128 prior to reaching the critical threshold of movement (e.g., halfway between the first and second positions), the bistable user actuatable interface 128 returns to the first position. In this regard, the user actuatable interface 128 may be bimodal and always remain at one of the first or second positions when not actively engaged by the user. The user actuatable interface 128 may be maintained at the first or second positions until acted upon by the user to prevent accidental unloading of tension in the tensioning system 129 during use.

Referring to FIGS. 4 and 5, the user actuatable interface 128 can be coupled to a linkage 132. The linkage 132 can operably couple the user actuatable interface 128 to a slider 134. The slider 134 is guided by an elongated feature, such as a rail 136, that retains the slider 134 and allows the slider 134 to move between a first position and a second position as the user actuatable interface 128 is moved between the first and second positions, respectively. The slider 134 can be biased towards the second position (FIG. 5) by a biasing element 138. The biasing element 138 can be a spring, e.g., a coil spring, oriented coaxial with the rail 136. In some instances, the rail 136 can be slotted within a central aperture of the biasing element 138 such that the rail 136 maintains the biasing element 138 at a desired location.

As the user actuatable interface 128 moves towards the second position (FIG. 5), a relative angle formed between the user actuatable interface 128 and the linkage 132 increases. As such, the effective length of the user actuatable interface 128 and linkage 132 decreases, causing the slider 134 to move in a direction away from the guide bar 116. As the user actuatable interface 128 moves towards the first position (FIG. 4), a relative angle formed between the user actuatable interface 128 and the linkage 132 decreases. As such, the effective length of the user actuatable interface 128 and linkage 132 increases, causing the slider 134 to move in a direction towards the guide bar 116. As described below, the slider 134 can be coupled to the guide bar 116 such that movement of the slider 134 towards or away from the guide bar 116 affects a relative position of the guide bar 116 with respect to the output shaft 124 (FIG. 2). As the output shaft 124 drives the cutting implement 112 to move about the guide bar 116, adjusting the relative position of the guide bar 116 relative to the output shaft 124 effects tension in the cutting implement.

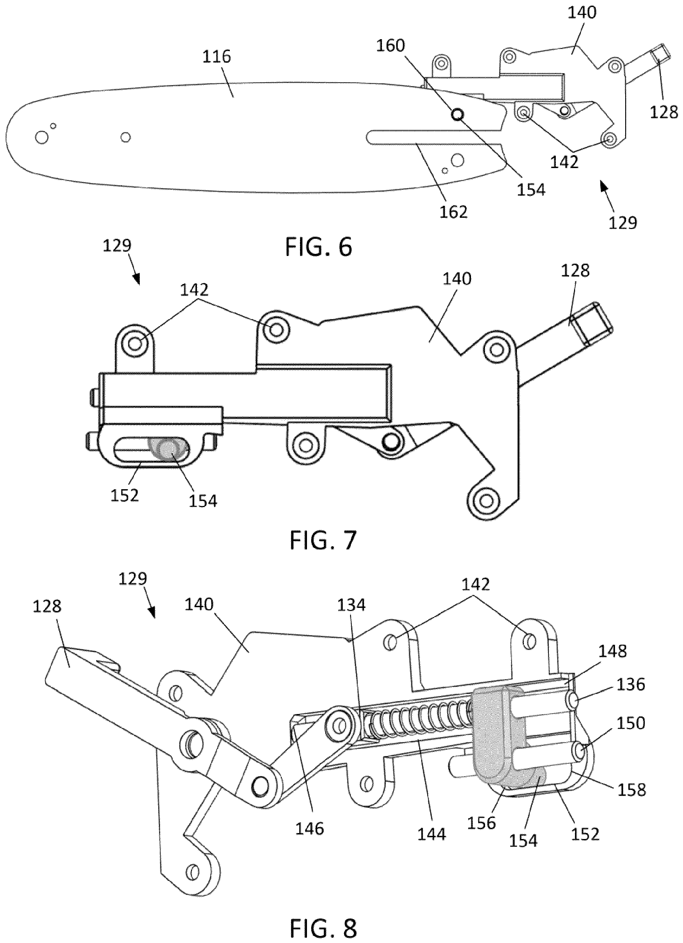

FIG. 6 illustrates a left side of the tensioning system 129 operably coupled to the guide bar 116 in accordance with an embodiment. FIG. 7 illustrates a left side view of the tensioning system 129 in accordance with an embodiment. FIG. 8 illustrates a perspective view of the right side of the tensioning system 129 in accordance with an embodiment. While the orientation depicted in FIGS. 6 to 8 shows particular components arranged on left and right sides of the tensioning system 129, it will be understood that the components may be rearranged.

Referring to FIGS. 6 to 8, the tensioning system 129 can include a frame 140. The frame 140 can be statically coupled to the housing 102 of the chainsaw 100 or another static portion of the chainsaw 100. The frame 140 is configured to remain relatively stationary with respect to the chainsaw 100. The frame 140 can include one or more openings (such as openings 142) each configured to receive a fastener that interfaces with the housing 102 or another static portion of the chainsaw 100 to attach the frame 140 to the housing 102.

The frame 140 can define a generally planar structure. The frame 140 can lie along a plane, or a best fit plane, that, when coupled to the housing 102, is oriented parallel, or generally parallel, with the guide bar 116.

The frame 140 can define a channel 144 having a first end 146 and a second end 148. In some instances, the channel 144 can extend fully through a thickness of the frame 140. In other instances, the channel 144 can define a recess that extends into the frame 140 less than the entire thickness of the frame 140. The channel 144 is configured to receive at least a portion of the slider 134. The slider 134 can move within the channel 144 between the first and second ends 146 and 148 as guided by movement of the user actuatable interface 128. In an embodiment, the rail 136 can be disposed adjacent to, or at least partially within, the channel 144. A secondary rail 150 can be disposed adjacent to the rail 136. The secondary rail 150 can extend generally parallel to the rail 136. In an embodiment, the secondary rail 150 can be disposed adjacent to an opening 152. In some instances, the opening 152 can be part of the frame 140. In other instances, the opening 152 can be part of a separate component coupled to the frame 140. The opening 152 can generally define an elongated slot in which a tensioning pin 154 extending from a slidable body can move. The tensioning pin 154 can be guided within the opening 152 by the rail 136 and the secondary rail 150. As the user actuatable interface 128 is moved to the first position (FIG. 4) the slider 134 can transmit force generated by movement of the user actuatable interface 128 to the biasing element 138. The biasing element 138 can impart force from the slider 134 to the slidable body, i.e., the tensioning pin 154, causing the tensioning pin 154 to move from a first end 156 of the opening 152, or a location near the first end 156 of the opening 152, towards a second end 158 of the opening 152. Conversely, as the user actuatable interface 128 is moved to the second position (FIG. 5) the slider 134 can move away from the tensioning pin 154 causing force to unload from the biasing element 138 and allowing the tensioning pin 154 to move from the second end 158 of the opening 152, or a location near the second end 158 of the opening 152, towards the first end 156 of the opening 152.

Referring to FIG. 6, the tensioning pin 154 can interface with the bar 116, e.g., at an opening 160 in the bar 116, such that movement of the tensioning pin 154 within the opening 152 causes the bar 116 to move towards or away from the output shaft 124 (FIG. 2). For instance, when the user actuatable interface 128 is moved to the first position, the bar 116 can be pushed by the tensioning pin 154 in a direction away from the output shaft 124. As such, tension within the cutting implement 112 increases. When the user actuatable interface 128 is moved to the second position, the bar 116 can be pulled by the tensioning pin 154 in a direction towards the output shaft 124. Tension generated in the cutting implement 112 can cause the bar 116 to move towards the output shaft 124, releasing tension from the cutting implement 112. In an embodiment, the opening 160 can have a size similar to a size of the tensioning pin 154. In this regard, any movement of the tensioning pin 154 can result in movement of the guide bar 116.

Using the tensioning system 129, a user can quickly adjust tension in the cutting implement 112 without overtightening the cutting implement 112. In an embodiment, the biasing element 138 interacts with the tensioning pin 154 by transferring some (or all) of the force from the slider 124 to the tensioning pin 154. The biasing element 138 can also absorb some of the force from the slider 134, e.g., by compressing, thus transmitting less than the entire force to the tensioning pin 154. Accordingly, the tensioning system 129 can allow for rapid tensioning and detensioning of the cutting implement 112 without overtightening the cutting implement 112.

The bar 116 can include a guide feature 162 that guides the bar 116 during tensioning and detensioning operations. The guide feature 162 depicted in FIG. 6 includes a slot extending into the bar 116 from a rear end of the bar 116. The slot can receive the bar support 126 and ride therealong during tensioning and detensioning. The bar 116 can ride along the bar support 126 while tension in the cutting implement 112 is adjusted using the tensioning system 129.

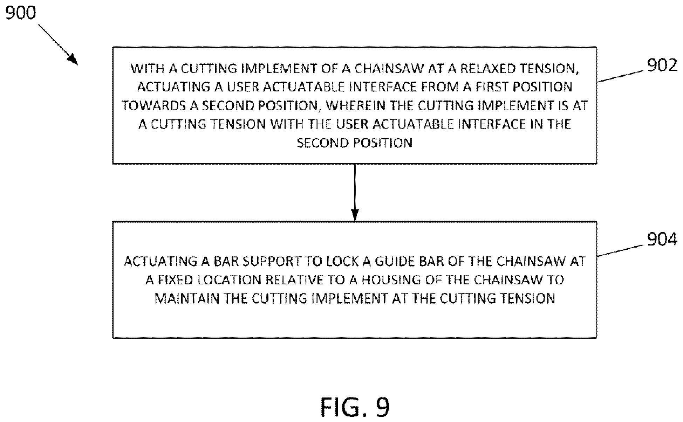

FIG. 9 illustrates a flow chart of a method 900 of tensioning a cutting implement of a chainsaw in accordance with an embodiment. In general, the method 900 will be described with reference to a system including the chainsaw 100 and associated equipment as described above with reference to FIGS. 1 to 8. In addition, although FIG. 9 depicts steps performed in a particular order for purposes of illustration and discussion, the method discussed herein is not limited to any particular order or arrangement. One skilled in the art, using the disclosure provided herein, will appreciate that various steps of the method disclosed herein can be omitted, rearranged, combined, and/or adapted in various ways without deviating from the scope of the present disclosure.

The method 900 includes a step 902 of, with a cutting implement of a chainsaw at a relaxed tension, actuating a user actuatable interface from a first position towards a second position, wherein the cutting implement is at a cutting tension with the user actuatable interface in the second position. The cutting implement can be at the relaxed tension when the user actuatable interface is in the first position. By way of example, actuating the user actuatable interface can include rotating the user actuatable interface until reaching a critical threshold of actuation. The critical threshold of actuation can occur at a critical rotational displacement between the first and second positions, such as a halfway point therebetween. Upon reaching the critical threshold of actuation, the user actuatable interface can snap to the second position. As used herein, snapping of the user actuatable interface is intended to refer to a mechanism of motion whereby no further force is required to displace the user actuatable interface to cause the user actuatable interface to reach its desired final location. In this regard, the user need only apply sufficient force to reach the critical threshold, after which the user actuatable interface can automatically continue movement towards the desired final location, i.e., one of the first or second positions.

In other embodiments, actuating the user actuatable interface between the first and second positions can occur through another type of motion, such as a roto-translational motion, a translational motion, or the like. In some instances, the entire motion between the first and second positions can occur via a common (same) type of motion. For example, the entire displacement motion between the first and second positions can occur via rotation or translation. In other instances, the motion between the first and second positions can include a plurality of different types of motion. For example, a first portion of displacement can occur through rotation and a second portion of displacement can occur through translation.

In an embodiment, the user can experience the critical threshold through a tactile and/or audible indication. For example, the snapping of the user actuatable interface can result in a tactile indication to the user. Alternatively, or additionally, an audible signal may be generated, such as for example, when the user actuatable interface reaches the desired final location (e.g., the first or second position). Upon reaching the desired final location, the user actuatable interface may impact against a stop feature or stop surface which creates an audible response that can be heard by the user.

In some instances, it is necessary to first loosen a guide bar of the chainsaw prior to actuating the user interface from the first position to the second position. Loosening the guide bar can be performed, for example, by actuating a bar support from a locked position and an unlocked position. In the locked position, the bar support can retain the guide bar at a relatively fixed position with respect to the housing of the chainsaw. With the bar support in the unlocked position, the guide bar can be movable relative to the housing.

In an embodiment, actuating the bar support can occur through a rotational displacement. For example, the bar support can be threadably engaged with a lug extending from the housing. Rotating the bar support can unthread the bar support relative to the lug, increasing a gap size between the bar support and the housing. The increased gap size allows the guide bar to be displaced.

Once the bar support is actuated to the unlocked position, the step 902 of actuating the user actuatable interface can be performed.

The method 900 can further include a step 904 of actuating the bar support to lock the guide bar of the chainsaw at a fixed location relative to the housing of the chainsaw. Actuating the bar support to the locked position can serve to maintain the cutting implement at the cutting tension. Once step 904 is complete, the chainsaw is ready for use in performing a cutting operation.

Further aspects of the invention are provided by one or more of the following embodiments:
Embodiment 1. A chainsaw comprising: a housing; a motor supported by the housing, the motor comprising an output shaft; a guide bar coupled to the housing, the guide bar defining a cutting track; a cutting implement guided by the cutting track and driven about the guide bar by rotation of the output shaft; a tension adjusting system for adjusting tension in the cutting implement by displacing the guide bar towards or away from the housing, the tension adjusting system comprising a user actuatable interface accessible from an exterior of the housing, wherein the user actuatable interface is a bistable movable between a first position and a second position, wherein the tension adjusting system tensions the cutting implement to a cutting tension when the user actuatable interface is in the first position, and wherein the tension adjusting system tensions the cutting implement to a relaxed tension when the user actuatable interface is in the second position.
Embodiment 2. The chainsaw of embodiment 1, wherein the tension adjusting system further comprises: a slider driven by the user actuatable interface between a first position and a second position; and a tensioning pin driven by the slider, wherein the tensioning pin interfaces with the bar such that movement of the user actuatable interface causes the tensioning pin to drive the bar to adjust tension in the cutting implement between the cutting tension and the relaxed tension.
Embodiment 3. The chainsaw of embodiment 2, wherein the tension adjusting system further comprises a linkage coupled between the user actuatable interface and the slider, wherein the linkage transforms rotational motion of the user actuatable interface to translational motion of the slider, and wherein the slider moves between the first and second positions by translating along a rail.
Embodiment 4. The chainsaw of any one or more of embodiments 2 or 3, wherein the tension adjusting system further comprises a frame, wherein the frame defines an elongated slot in which the tensioning pin moves, and wherein the frame defines a pivot point for the user actuatable interface to move between the first position and the second position.
Embodiment 5. The chainsaw of any one or more of embodiments 2 to 4, wherein the slider is biased towards the second position by a spring, the spring disposed about a perimeter of at least a portion of the slider.
Embodiment 6. The chainsaw of embodiment 5, wherein the spring defines a first length when the cutting implement is at the cutting tension and a second length when the cutting implement is at the relaxed tension, and wherein the second length is longer than the first length.
Embodiment 7. The chainsaw of any one or more of embodiments 1 to 6, wherein the user actuatable interface extends from the housing in a direction parallel with the guide bar.
Embodiment 8. The chainsaw of embodiment 7, wherein the guide bar is disposed in a first plane, and wherein movement of the user actuatable interface between the first and second positions occurs in a second plane oriented parallel to the first plane.
Embodiment 9. A tension adjusting system for adjusting tension in a cutting implement of a chainsaw, the tension adjusting system comprising: a user actuatable interface accessible from an exterior of a housing of the chainsaw, wherein the user actuatable interface is a bistable movable between a first position and a second position; a slider movably coupled to a rail and displaceable along the rail by actuation of the user actuatable interface; a tensioning pin operably coupled to a guide bar of the chainsaw, the guide bar having a cutting track to guide the cutting implement; and a spring disposed between the slider and the tensioning pin, wherein the spring transmits force to the tensioning pin as the slider moves towards the tensioning pin, and wherein the force transmitted from the slider to the tensioning pin causes the guide bar to displace away from a housing of the chainsaw, thereby increasing tension in the cutting implement from a relaxed tension to a cutting tension.
Embodiment 10. The tension adjusting system of embodiment 9, wherein the tension adjusting system further comprises a frame, wherein the frame defines an elongated slot in which the tensioning pin moves, and wherein the frame defines a pivot point for the user actuatable interface to move between the first position and the second position.
Embodiment 11. The tension adjusting system of any one or more of embodiments 9 or 10, wherein the tensioning pin comprises a body slidably coupled to the rail, and wherein the body is prevented from sliding off the rail by delimiting portions of the frame.
Embodiment 12. The tension adjusting system of any one or more of embodiments 9 to 11, wherein movement of the user actuatable interface between the first and second positions occurs in a first plane, wherein the rail extends in a direction parallel to the first plane, and wherein movement of the tensioning pin occurs in a direction parallel to the first plane.
Embodiment 13. The tension adjusting system of any one or more of embodiments 9 to 12, wherein, upon reaching a critical threshold of actuation from one of the first position or the second position, the user actuatable interface snaps to the other of the first position or the second position, the critical threshold of actuation occurring prior to reaching the other of the first position or the second position.
Embodiment 14. The tension adjusting system of any one or more of embodiments 9 to 13, wherein the tension adjusting further comprises a linkage extending between the user actuatable interface and the slider, wherein the linkage converts rotational motion from the user actuatable interface into translational motion of the slider.
Embodiment 15. A method of tensioning a cutting implement of a chainsaw, the method comprising: with the cutting implement at the relaxed tension, actuating a user actuatable interface from a first position towards a second position, wherein actuating the user actuatable interface comprises rotating the user actuatable interface until reaching a critical threshold of actuation, the critical threshold of actuation occurring prior to the user actuatable interface reaching the second position, wherein, upon reaching the critical threshold of actuation, the user actuatable interface moves (e.g., snaps) to the second position, and wherein the cutting implement is at a cutting tension with the user actuatable interface in the second position; and actuating a bar support to lock a guide bar of the chainsaw at a fixed location relative to a housing of the chainsaw to maintain the cutting implement at the cutting tension.
Embodiment 16. The method of embodiment 15, wherein actuating the user actuatable interface causes a slider to translate along a rail towards a tensioning pin, and wherein translation of the slider towards the tensioning pin compresses a spring between the slider and the tensioning pin such that the tensioning pin moves in a direction away from the slider.
Embodiment 17. The method of embodiment 16, wherein the tensioning pin is configured to interface with a guide bar having a cutting track that receives the cutting implement, and wherein movement of the tensioning pin away from the slider causes the guide bar to move away from a motor driving the cutting implement thereby increasing tension in the cutting implement to the cutting tension.
Embodiment 18. The method of embodiment 17, wherein the spring defines a first length when the cutting implement is at the cutting tension and a second length when the cutting implement is at the relaxed tension, and wherein the second length is longer than the first length.
Embodiment 19. The method of any one or more of embodiments 15 to 18, wherein actuating the user actuatable interface is performed by rotating the user actuatable interface about a pivot point, the pivot point having a pivot axis oriented perpendicular to a plane defined by a guide bar supporting the cutting implement.
Embodiment 20. The method of any one or more of embodiments 15 to 19, wherein the user actuatable interface extends outward from a housing of the chainsaw such that actuating the user actuatable interface is performed with the housing in the in-use state.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A chainsaw comprising:
a housing;
a motor supported by the housing, the motor comprising an output shaft;
a guide bar coupled to the housing, the guide bar defining a cutting track;
a cutting implement guided by the cutting track and driven about the guide bar by rotation of the output shaft;
a tension adjusting system for adjusting tension in the cutting implement by displacing the guide bar towards or away from the housing, the tension adjusting system comprising a user actuatable interface accessible from an exterior of the housing, wherein the user actuatable interface is a bistable movable between a first position and a second position, wherein the tension adjusting system tensions the cutting implement to a cutting tension when the user actuatable interface is in the first position, and wherein the tension adjusting system tensions the cutting implement to a relaxed tension when the user actuatable interface is in the second position.

2. The chainsaw of claim 1, wherein the tension adjusting system further comprises:
a slider driven by the user actuatable interface between a first position and a second position; and
a tensioning pin driven by the slider, wherein the tensioning pin interfaces with the bar such that movement of the user actuatable interface causes the tensioning pin to drive the bar to adjust tension in the cutting implement between the cutting tension and the relaxed tension.

3. The chainsaw of claim 2, wherein the tension adjusting system further comprises a linkage coupled between the user actuatable interface and the slider, wherein the linkage transforms rotational motion of the user actuatable interface to translational motion of the slider, and wherein the slider moves between the first and second positions by translating along a rail.

4. The chainsaw of any one of claims 2 or 3, wherein the tension adjusting system further comprises a frame, wherein the frame defines an elongated slot in which the tensioning pin moves, and wherein the frame defines a pivot point for the user actuatable interface to move between the first position and the second position.

5. The chainsaw of any one of claims 2 to 4, wherein the slider is biased towards the second position by a spring, the spring disposed about a perimeter of at least a portion of the slider.

6. The chainsaw of claim 5, wherein the spring defines a first length when the cutting implement is at the cutting tension and a second length when the cutting implement is at the relaxed tension, and wherein the second length is longer than the first length.

7. The chainsaw of any one of claims 1 to 6, wherein the user actuatable interface extends from the housing in a direction parallel with the guide bar.

8. The chainsaw of claim 7, wherein the guide bar is disposed in a first plane, and wherein movement of the user actuatable interface between the first and second positions occurs in a second plane oriented parallel to the first plane.

9. A method of tensioning the cutting implement of the chainsaw of any of claims 1 to 8, the method comprising:
with the cutting implement at the relaxed tension, actuating the user actuatable interface from the first position towards the second position, wherein actuating the user actuatable interface comprises rotating the user actuatable interface until reaching a critical threshold of actuation, the critical threshold of actuation occurring prior to the user actuatable interface reaching the second position, wherein, upon reaching the critical threshold of actuation, the user actuatable interface moves to the second position, and wherein the cutting implement is at the cutting tension with the user actuatable interface in the second position; and
actuating a bar support to lock the guide bar of the chainsaw at a fixed location relative to the housing to maintain the cutting implement at the cutting tension.

10. The method of claim 9, wherein actuating the user actuatable interface causes a slider to translate along a rail towards a tensioning pin, and wherein translation of the slider towards the tensioning pin compresses a spring between the slider and the tensioning pin such that the tensioning pin moves in a direction away from the slider.

11. The method of claim 10, wherein the tensioning pin is configured to interface with the cutting track, and wherein movement of the tensioning pin away from the slider causes the guide bar to move away from the motor thereby increasing tension in the cutting implement to the cutting tension.

12. The method of claim 11, wherein the spring defines a first length when the cutting implement is at the cutting tension and a second length when the cutting implement is at the relaxed tension, and wherein the second length is longer than the first length.

13. The method of any one of claims 9 to 12, wherein actuating the user actuatable interface is performed by rotating the user actuatable interface about a pivot point, the pivot point having a pivot axis oriented perpendicular to a plane defined by the guide bar.

14. The method of any one of claims 9 to 13, wherein the user actuatable interface extends outward from the housing of the chainsaw such that actuating the user actuatable interface is performed with the housing in the in-use state.

15. The method of claim 14, wherein the guide bar is disposed in a first plane, and wherein movement of the user actuatable interface between the first and second positions occurs in a second plane oriented parallel to the first plane.
